# EUROPEAN PATENT SPECIFICATION

(11) **EP 0 519 723 B1**
(45) Date of publication and mention of the grant of the patent: **28.12.1994**
(21) Application number: 92305609.7
(22) Date of filing: 18.06.1992
(51) Int. Cl.: B60T 15/04

(54) **Fluid pressure control valve**
Druckregelventil
Soupape de régulation de pression

(30) Priority: 19.06.1991 GB 9113204
(43) Date of publication of application: 23.12.1992
(73) Proprietor: BENDIX HVCG EUROPE LIMITED, Kingswood, Bristol BS15 2NL (GB)
(72) Inventor: Thompson, Paul David, Bath, Avon BA2 3HS (GB)
(74) Representative: Turner, Alan Reginald

(56) References cited:
- EP-A- 0 105 764
- EP-A- 0 157 467
- EP-A- 0 196 814

## Description

This invention relates to a fluid pressure control valve and relates more particularly to a control valve for providing two output pressure characteristics in response to a single control member.

Fluid pressure control valves are known from EP-A-0 196 814 and EP-A-0 157 467.

In vehicle compressed air braking systems it is a requirement to provide a control valve assembly which provides two inverse output pressure characteristics which are substantially the same over predetermined ranges of control but to enable one such output pressure to revert to full delivered pressure in a step function for a given position of a control member. In a typical hand operable fluid pressure control valve assembly for providing two output pressure signals to be employed for example in controlling secondary or parking brakes on a tractor vehicle and secondary brakes on a trailer, the assembly may be provided with two graduable double valves operable together by a common control handle. Moreover in order to cause a step transition of the output of one of the double valves a distinct separate handle movement is provided for. Such an assembly tends to be complex and to have a large number of moving parts and seals and the present invention has an object to provide a more compact assembly with fewer moving components.

A fluid pressure control valve with the features of the preamble of Claim 1 is known from EP-A-0 105 764.

According to the present invention there is provided a fluid pressure control valve assembly having a housing including a fluid pressure input port first and second fluid pressure delivery ports and a vent port, a fluid pressure responsive member sealingly movable within the housing and being subject on one side to delivery fluid pressure and being subject in an opposing sense to a graduating force which is dependent upon the position in the housing, said pressure responsive member carrying a double valve element movable therein to engage or disengage a delivery valve seat, said double valve element being engageable also with a vent valve seat the position of which in the housing is movable by a control member to determine the lapping position of the double valve member characterised by further valve means operable by the control member at a predetermined position to apply further fluid pressure to said pressure responsive member in the same sense as the preceding graduating force to move said member to effect connection of the supply port selectively only to the second delivery port.

In order that the invention may be more clearly understood and readily carried into effect, the same will be further described by way of example with reference to the accompanying drawings of which,
Fig. 1 illustrates in sectional diagrammatic form a compressed air pressure control valve assembly employing the invention and
Fig. 2 illustrates in graphical form operation characteristics of the valve of Fig. 1.

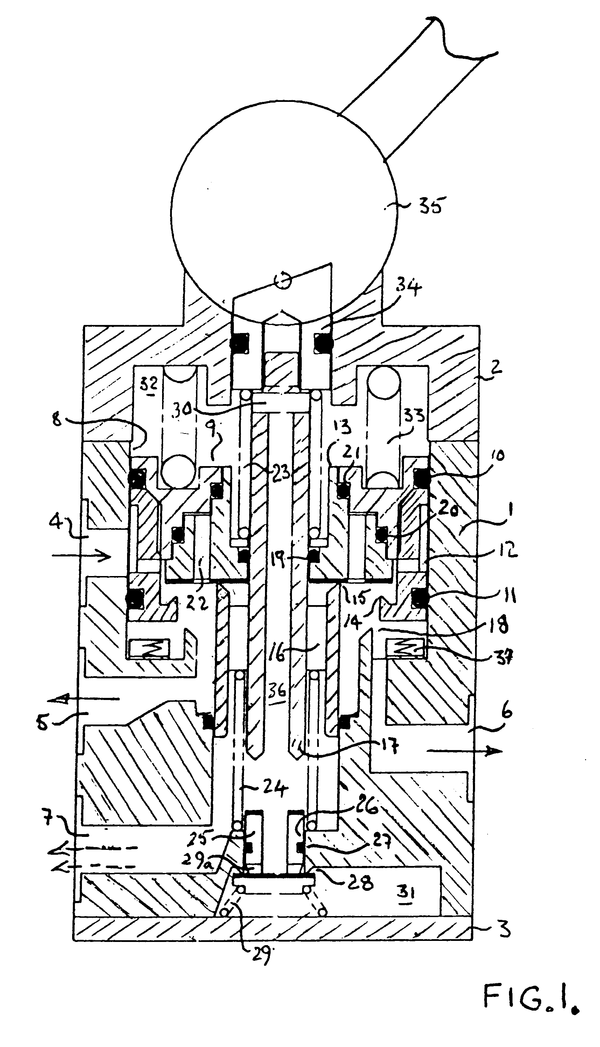

Referring to Fig. 1, the assembly comprises a valve housing 1 with upper and lower cover parts 2 and 3. The housing has a fluid pressure supply port 4, a first air pressure delivery port 5, a second air pressure delivery port 6 and a vent port 7. Sealingly slideable within a cylindrical bore 8 there is provided a pressure responsive member in the form of a piston 9 with axially spaced annular seals 10 and 11 between which an annular passage 12 communicates with the supply port 4.

The piston 9 carries within it a sealingly guided axially movable double-valve element 13 engageable on the one hand with an annular inlet valve seat 14 of the piston 9 and with a smaller diameter annular concentric vent valve seat 15 carried on a web 16 of an axially movable tubular member 17. As will be seen a third coaxial valve seat 18 is carried in the housing radially between seats 14 and 15 but axially below seat 14 to be engageable by the valve member when the piston 9 is caused to move downwards against the action of a resilient annular stop member 37 supported in the housing. A graduating spring 33 is located under compression in a region 32 between the piston 9 and the upper cover part 2 of the housing.

The valve element 13 is sealingly movable relative to tubular member 17 via a seal 19 and is movable relatively to the piston 9 through seals 20 and 21 which define between them an annular balancing area and which is connected directly to the delivery region of port 5 through a passage 22. This annular balancing area is substantially equal to the area defined between seats 14 and 15. Light springs 23 and 24 act respectively downwards on valve element 13 and upwards on tubular member 17 through web 16.

A further simple and smaller double valve element 25 is sealingly slideable within a smaller bore 26 of the housing through a seal 27 and is urged into sealing engagement with a seat 28 in a region 31 by a light spring 29. Region 31 is connected via a passage (not shown) to the supply port 4. The member 25 is also sealingly engageable by downward movement of the tubular member 17 further movement of which will unseat it from seat 28. Transverse passages 29a in 25 and 30 in tubular member 17 therefore provide a path for connection of supply pressure in region 31 to the sealed region 32 above piston 9 and wherein the graduating spring 33 is captively housed to act downwardly on piston 9. The action of spring 33 is opposed by the action of a control member 35 on a control cam follower shown diagrammatically at 34 to which the tubular member 17 is connected, lifting valve element 13 off seat 14 to permit supply air pressure at part 4 to act on the underside of the piston 9.

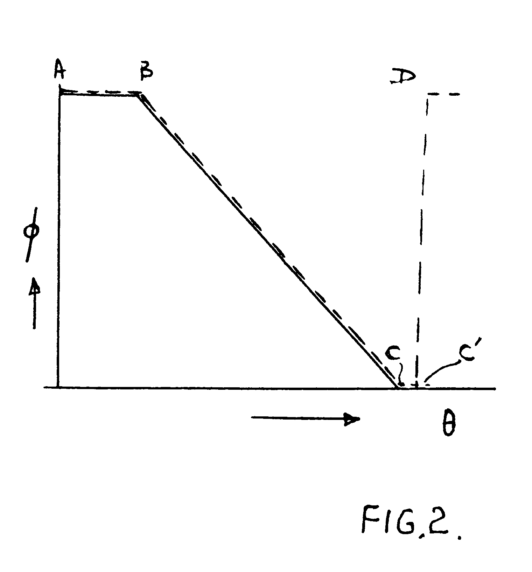

Operation of the valve assembly is required to produce output pressure at ports 5 and 6 as indicated by respective solid and broken lines of the graphical representation of Fig. 2. In Fig. 2 the delivered pressures are shown as ordinates φ and the control member position as abscissae ϑ. In the shown position of the assembly, the piston 9 is held upwards by the action of the tubular member 17 holding the vent valve seat 15 closed and the inlet valve seat 14 uncovered so that the full supply pressure at port 4 acts beneath piston 9. Accordingly, the delivered pressures in ports 5 and 6 are one and the same and correspond to the regions "AB" of the characteristics. As the control member is moved from the shown position so that the seat 15 moves downwards towards, it reaches a position whereat the element 13 can engage inlet valve seat 14 to close off the supply and this approximates to point B of the characteristics. Further downward movement of 15 permits some venting of the delivered pressures due to temporary unseating of the seat 15 from element 13 and the valve will then relap at progressively reducing pressures along the portions BC of the characteristics. At point C the output graduating effect of spring 33 is substantially terminated and the delivered pressures at ports 5 and 6 are arranged to be substantially zero. However at the point C the element 13 engages with seat 18 to disconnect ports 5 and 6 from each other. Further downward movement of member 17 can be effected by the control member 35 and at a point C′ tubular member 17 sealingly engages the valve member 25 to disconnect the tubular passage 36 and transverse passage 30 thereof and region 32 from atmosphere and thereafter unseat member 25 from seat 28 to apply supply pressure from 31 to chamber 32. This pressure now acting upon piston 9 with sufficient force to overcome the resilience of the stop member 37 to enable seat 14 to move downwards further and to disengage from the valve member 13. This connects the supply pressure in the annular region 12 to the second delivery port 6, as represented by region C'D of the broken line characteristic of Fig. 2. It will be appreciated that since valve seat 18 remains closed by the element 13 at this time the first delivery port output is able to remain at substantially zero pressure.

Since the area of the piston 9 which is acted upon by the supply pressure delivered via chamber 31 is greater than the annular area outside seat 14, the valve assembly can be arranged to rest in a stable condition in the position which produces output C1 at port 6. In view of this when the valve assembly is used as a parking brake controlling tractor parking brakes (typically spring brakes) from the first delivery port and controlling trailer brakes from the second delivery port the vehicle combination may be parked if required making use of the tractor parking brakes only. Alternatively, the valve assembly may be provided with a mechanical gate arrangement whereby after establishing that the vehicle combination is able to park on the tractor brakes only the control member can be released to and latched at the condition whereat the two delivery ports receive the pressures at values C in Fig. 2.

Upon reverse movement of the control member and overcoming any aforementioned stability, the member 25 is first reseated on seat 28 and then disengaged from member 17 to permit venting of chamber 32 followed by return or upward movement of the piston 9 causing seating and unseating respectively at 14 and 18. Thereafter, ignoring hysteresis, progressive upward movement of member 17 results in the two characteristics proceeding approximately along lines CB to full output pressures at the two delivery ports.

## Claims

1. A fluid pressure control valve assembly having a housing (1,2,3) including a fluid pressure input port (4) first (5) and second (6) fluid pressure delivery ports and a vent port (7), a fluid pressure responsive member (9) sealingly movable within the housing and being subject on one side to delivery fluid pressure and being subject in an opposing sense to a graduating force (33) which is dependent upon the position in the housing, said pressure responsive member carrying a double valve element (13) movable therein to engage or disengage a delivery valve seat (14), said double valve element (13) being engageable also with a vent valve seat (15) the position of which in the housing is movable by a control member (35) to determine the lapping position of the double valve member characterised by further valve means (17,25,28) operable by the control member at a predetermined position to apply further fluid pressure to said pressure responsive member in the same sense as the preceding graduating force to move said member to effect connection of the supply port selectively only to the second delivery port.

2. A fluid pressure control valve assembly as claimed in claim 1, characterised by a third valve seat (18) engageable by said double valve element (13) to interrupt communication between the first (5) and second (6) delivery ports.

3. A fluid pressure control valve assembly as claimed in claim 2, characterised in that said double valve element (13) has two seals (20,21) between itself and the pressure responsive member, said seals defining a balancing area connected to and equivalent to the area defined between said vent valve seat (15) and said further valve seat (18).

4. A fluid pressure control valve assembly as claimed in claim 1, 2 or 3 characterised in that said valve seats are substantially coaxial with an axial member (17) axially movable by the control member (35).

5. A fluid pressure control valve assembly as claimed in claim 4, characterised in that said axial member (17) passes through the valve element (13) and is operably engageable with said further valve means (25,28).

6. A fluid pressure control valve assembly as claimed in claim 5, characterised in that said axial member 17 has an internal passage (30,36) and is sealingly engageable with said further valve means to communicate said further fluid pressure to said pressure responsive member.

## Patentansprüche

1. Fluiddrucksteuerventilgebilde, welches ein Gehäuse (1,2,3) hat umfassend eine Fluiddruckeingangsöffnung (4), eine erste (5) und eine zweite (6) Fluiddruckabgabeöffnung und eine Entlüftungsöffnung (7), einen auf Fluiddruck ansprechenden Teil (9), der in dem Gehäuse abgedichtet bewegbar und auf einer Seite dem Abgabefluiddruck unterworfen ist und in einem entgegengesetzten Sinn einer Abstufungskraft (33) unterworfen ist, die von der Position in dem Gehäuse abhängig ist, der auf Druck ansprechende Teil ein Doppelventilelement (13) trägt, welches darin bewegbar ist, um mit einem Abgabeventilsitz (14) in oder außer Eingriff zu treten, das Doppelventilelement (13) auch mit einem Entlüftungsventilsitz (15) in Eingriff treten kann, dessen Position in dem Gehäuse durch einen Steuerteil (35) bewegbar ist, um die Überlappungsposition des Doppelventilgliedes zu bestimmen,
**gekennzeichnet,** durch eine weitere Ventileinrichtung (17,25,28), die von dem Steuerteil an einer vorbestimmten Position betätigbar ist, um weiterhin Fluiddruck an den auf Druck ansprechenden Teil anzulegen in dem gleichen Sinn wie die vorhergehende Abstufungskraft, um diesen Teil zu bewegen, um wahlweise Verbindung der Zufuhröffnung mit lediglich der zweiten Abgabeöffnung zu bewirken.

2. Fluiddrucksteuerventilgebilde nach Anspruch 1, gekennzeichnet durch einen dritten Ventilsitz (18), mit welchem das Doppelventilelement (13) in Eingriff treten kann, um Verbindung zwischen der ersten (5) und der zweiten (6) Abgabeöffnung zu unterbrechen.

3. Fluiddrucksteuerventilgebilde nach Anspruch 2, dadurch gekennzeichnet, daß das Doppelventilelement (13) zwei Dichtungen (20,21) zwischen sich selbst und dem auf Druck ansprechenden Teil hat, wobei die Dichtungen einen Ausbalancier- bzw. Ausgleichsbereich definieren, der mit der Fläche verbunden und zu ihr gleichwertig ist, die zwischen dem Entlüftungsventilsitz (15) und dem weiteren Ventilsitz (18) bestimmt ist.

4. Fluiddrucksteuerventilgebilde nach Anspruch 1, 2 oder 3, dadurch gekennzeichnet, daß die Ventilsitze im wesentlichen gleichachsig zu einem axialen Teil (17) liegen, der durch den Steuerteil (35) axial bewegbar ist.

5. Fluiddrucksteuerventilgebilde nach Anspruch 4, dadurch gekennzeichnet, daß der axiale Teil (17) durch das Ventilelement (13) hindurchgeht und mit der weiteren Ventileinrichtung (25,28) arbeitsmäßig in Eingriff treten kann.

6. Fluiddrucksteuerventilgebilde nach Anspruch 5, dadurch gekennzeichnet, daß der axiale Teil (17) einen inneren Durchgang (30,36) hat und mit der weiteren Ventileinrichtung abgedichtet in Eingriff treten kann, um den weiteren Fluiddruck zu dem auf Druck ansprechenden Teil zu liefern.

## Revendications

1. Ensemble de soupape de régulation de pression hydraulique comportant un boîtier (1,2,3) comprenant un orifice d'entrée de pression hydraulique (4), des premier (5) et deuxième (6) orifices de débit de pression hydraulique et un orifice de décharge (7), un élément sensible à la pression hydraulique (9) mobile de façon étanche à l'intérieur du boîtier et soumis sur un côté à la pression hydraulique débitée et soumis en sens opposé à une force graduée (33) qui dépend de la position dans le boîtier, ledit élément sensible à la pression portant un élément de soupape double (13) mobile à l'intérieur pour s'engager avec ou se désengager d'un siège de soupape de débit (14), ledit élément de soupape double (13) pouvant également s'engager avec un siège de soupape de décharge (15) dont la position dans le boîtier peut être déplacée par un élément de commande (35) pour déterminer la position neutre de l'élément de soupape double, caractérisé par un autre moyen de soupape (17,25,28) qui peut être actionné par l'élément de commande à une position prédéterminée pour appliquer de la pression hydraulique supplémentaire audit élément sensible à la pression dans le même sens que la force graduée précédente pour déplacer ledit élément pour assurer la communication de l'orifice d'alimentation sélectivement, avec seulement le deuxième orifice de débit.

2. Ensemble de soupape de régulation de pression hydraulique suivant la revendication 1, caractérisé par un troisième siège de soupape (18) avec lequel peut s'engager ledit élément de soupape double (13) pour interrompre la communication entre les premier (5) et deuxième (6) orifices de débit.

3. Ensemble de soupape de régulation de pression hydraulique suivant la revendication 2, caractérisé en ce que ledit élément de soupape double (13) comporte deux joints d'étanchéÍté (20,21) entre lui-même et l'élément sensible à la pression, lesdits joints définissant une zone d'équilibrage reliée à et équivalente à la zone définie entre ledit siège de soupape de décharge (15) et ledit autre siège de soupape (18).

4. Ensemble de soupape de régulation de pression hydraulique suivant les revendications 1, 2 ou 3, caractérisé en ce que lesdits sièges de soupape sont sensiblement coaxiaux à un élément axial (17) pouvant être déplacé axialement par l'élément de commande (35).

5. Ensemble de soupape de régulation de pression hydraulique suivant la revendication 4, caractérisé en ce que ledit élément axial (17) traverse l'élément de soupape (13) et peut s'engager avec ledit autre moyen de soupape (25,28).

6. Ensemble de soupape de régulation de pression hydraulique suivant la revendication 5, caractérisé en ce que ledit élément axial (17) comporte un passage interne (30,36) et peut s'engager de façon étanche avec ledit moyen de soupape pour communiquer ladite pression hydraulique supplémentaire audit élément sensible à la pression.
